# EUROPÄISCHE PATENTSCHRIFT

(11) **EP 2 954 647 B1**
(45) Veröffentlichungstag und Bekanntmachung des Hinweises auf die Patenterteilung: **06.03.2019**
(21) Anmeldenummer: 14708194.7
(22) Anmeldetag: 09.02.2014
(51) Int. Cl.: H04L 12/28, H04L 29/08, G05B 15/02, H04M 1/725, H04W 4/00, F24F 11/30, F24F 11/62

(54) **VERFAHREN UND STEUERUNGSVORRICHTUNG ZUM EIN- UND AUSSCHALTEN VON EINEM NACHTMODUS EINER HEIZUNGS- UND/ODER KLIMAANLAGE**
METHOD AND CONTROL APPARATUS FOR SWITCHING ON AND OFF A NIGHT MODE OF A HEATING SYSTEM AND/OR AN AIR-CONDITIONING SYSTEM
PROCÉDÉ ET DISPOSITIF DE COMMANDE POUR METTRE EN MARCHE ET ARRÊTER UN MODE DE FONCTIONNEMENT NOCTURNE D'UNE INSTALLATION DE CHAUFFAGE ET/OU DE CLIMATISATION

(30) Priorität: 10.02.2013 DE 102013002430
(43) Veröffentlichungstag der Anmeldung: 16.12.2015
(73) Patentinhaber: tado GmbH, 80637 München (DE)
(72) Erfinder: SCHWARZ, Johannes, 81669 München (DE); DEILMANN, Christian, 80805 München (DE)
(74) Vertreter: Ridderbusch, Oliver
(86) Internationale Anmeldenummer: PCT/EP2014/000351
(87) Internationale Veröffentlichungsnummer: WO 2014/121947

(56) Entgegenhaltungen:
- WO-A1-2012/068517
- US-A1- 2008 008 313
- US-A1- 2009 192 556
- US-A1- 2010 013 778
- US-A1- 2011 063 138

## Beschreibung

### TECHNISCHES GEBIET

Die vorliegende Erfindung betrifft ein Verfahren sowie eine Steuerungsvorrichtung zum Ein- und Ausschalten eines Nachtmodus einer Heizungs- und/oder Klimaanlage.

Mit einer Heizungs- und/oder Klimaanlage soll ein Raum, in dem sich die Anlage befindet, und/oder ein oder mehrere andere Räume erwärmt oder abgekühlt werden.

Um überflüssige Energiekosten zu vermeiden, sollte bei einer Heizungsanlage eine Solltemperatur, auf die die Heizungsanlage eine Umgebung heizt, nicht unnötig hoch sein. Analog sollte eine Klimaanlage eine Umgebung nicht unnötig stark kühlen.

Viele Personen erachten für eine Schlafphase eine geringere Raumtemperatur und damit eine geringere Heizleistung einer Heizungsanlage für ausreichend. Beispielsweise kann die Raumtemperatur um 1°C bis 5°C während des Schlafs verringert werden. Zum Reduzieren der Kosten einer Klimaanlage kann während dem Schlaf auch eine höhere Raumtemperatur akzeptiert werden. Daher wird bei bekannten Verfahren und Steuerungsvorrichtungen nachts ein Nachtmodus eingestellt.

Beim Einschalten des Nachtmodus wird bei einem gattungsgemäßen Verfahren ein Energieverbrauch der Heizungs- und/oder Klimaanlage, das heißt eine Heiz- oder Kühlleistung, verringert und beim Ausschalten des Nachtmodus erhöht. Der Nachtmodus kann daher auch als Energiesparmodus bezeichnet werden.

Bei einer gattungsgemäßen Steuerungsvorrichtung zum Ein- und Ausschalten eines Nachtmodus einer Heizungs- und/oder Klimaanlage ist eine Einstelleinrichtung vorgesehen, die mit der Heizungs- und/oder Klimaanlage verbindbar ist zum Ändern der Heiz- und/oder Kühlleistung der Heizungs- und/oder Klimaanlage. Dabei wird ein Energieverbrauch der Heizungs- und/oder Klimaanlage beim Einschalten des Nachtmodus verringert und beim Ausschalten des Nachtmodus erhöht.

Außerhalb des Nachtmodus, das heißt in einem Tagmodus, kann der Energieverbrauch konstant oder variabel sein. Insbesondere kann der Tagmodus zudem durch weitere Phasen unterbrochen werden, in welchen der Energiebedarf auch geringer sein kann als im Nachtmodus. Dies mag wünschenswert sein, wenn sich über viele Stunden niemand in den zu heizenden oder zu kühlenden Räumen aufhält.

Es ist bekannt, einen Nachtmodus gemäß einem Zeitplan uhrzeitabhängig einzustellen. Hierdurch kann zwar eine gewisse Übereinstimmung mit tatsächlichen Schlafphasen einer Person erreicht werden. Typischerweise sind aber Uhrzeiten, zu denen Personen schlafen gehen und wieder aufstehen, variabel. Bleibt eine Person länger als üblich wach, wird bei einem festen Zeitplan eine Heiz- oder Kühlleistung der Heizungs- und/oder Klimaanlage zu früh heruntergefahren. Dadurch wird eine Zimmertemperatur auf einen unerwünschten Wert eingestellt. Begibt sich eine Person früher als üblich zur Ruhe, führt ein fester Zeitplan zu einer unnötig hohen Heiz- oder Kühlleistung. In entsprechender Weise führt ein Beenden des Nachtmodus gemäß einem festen Zeitplan zu unnötig hohen Heiz- oder Kühlleistungen, womit beträchtliche Kosten einhergehen, oder zu Raumtemperaturen, die als unangenehm erachtet werden.

WO 2012068517 A1 beschreibt, dass ein HVAC-System über ein Interface ein- und ausgeschaltet werden kann. Für einen Einschalt- oder Ausschaltvorgang muss ein Benutzer, beispielsweise über ein Smartphone, jeweils einen speziellen Befehl eingeben.

US 20080008313 A1 betrifft ein Gerät, das zwischen einem energiesparenden Schlafmodus und einem normales Betriebsmodus selbstständig wechselt. Hierzu erfasst das Gerät, ob es bewegt wird, und schaltet automatisch vom Schlafmodus auf den Betriebsmodus um, wenn eine Bewegung festgestellt wird. Wird keine Benutzung oder Bewegung des Geräts festgestellt, schaltet es sich nach einer vorgegebenen Zeitdauer in den Schlafmodus.

Aus US 20090192556 A1 ist ein medizinisches Therapiegerät bekannt, welches eine Gehirnaktivität eines Menschen ermittelt, insbesondere durch am Kopf angebrachte Elektroden. Abhängig von der Gehirnaktivität soll eine Therapie, beispielsweise eine Medikamentenabgabe, gesteuert werden.

Bei US 20110063138 A1 wird mittels GPS überwacht, ob ein Fahrzeug einen vorgegebenen Bereich verlassen hat, was beispielsweise auf einen Diebstahl des Fahrzeugs hinweisen kann.

US 20100013778 A1 beschreibt ein tragbares Gerät, beispielsweise ein Smartphone, welches zwischen einem Schlafmodus und einem aktiven Betriebsmodus abhängig davon wechselt, ob es bewegt wird und ein berührungsempfindlicher Sensor am Gerät berührt wird.

### AUFGABE DER ERFINDUNG

Als Aufgabe der Erfindung kann erachtet werden, ein Verfahren sowie eine Steuerungsvorrichtung zum Ein- und Ausschalten eines Nachtmodus einer Heizungs- und/oder Klimaanlage bereitzustellen, deren Schaltzeiten möglichst genau an ein Verhalten eines Benutzers angepasst sind.

### BESCHREIBUNG DER ERFINDUNG

Diese Aufgabe wird durch das Verfahren mit den Merkmalen des Anspruchs 1 und durch die Steuerungsvorrichtung mit den Merkmalen des Anspruchs 13 gelöst.

Das vorgenannte Verfahren zum Ein- und Ausschalten eines Nachtmodus einer Heizungs- und/oder Klimaanlage ist erfindungsgemäß dadurch gekennzeichnet, dass mit einem Smartphone eine Aktivität eines Benutzers des Smartphones erfasst wird, dass mit Programmcode beim Feststellen einer Aktivität auf einen Aktivitätszustand des Benutzers geschlossen wird und beim Ausbleiben einer Aktivität auf einen Ruhezustand des Benutzers geschlossen wird, wobei der Programmcode auf einem nicht flüchtigen Datenspeicher gespeichert ist, und dass elektronische Steuerungsmittel den Nachtmodus abhängig davon ein- oder ausschalten, ob ein

Ruhezustand oder Aktivitätszustand des Benutzers festgestellt wurde.

Bei der oben beschriebenen Steuerungsvorrichtung zum Ein- und Ausschalten eines Nachtmodus einer Heizungs- und/oder Klimaanlage ist erfindungsgemäß vorgesehen, dass ein nicht flüchtiger Datenspeicher mit Programmcode vorhanden ist, der von einem Smartphone ausführbar ist. Der Programmcode ist dazu gestaltet, bei Ausführung auf dem Smartphone eine Aktivität eines Benutzers des Smartphones zu erfassen, beim Feststellen einer Aktivität auf einen Aktivitätszustand des Benutzers zu schließen, beim Ausbleiben einer Aktivität auf einen Ruhezustand des Benutzers zu schließen und Informationen darüber, ob ein Ruhezustand oder ein Aktivitätszustand festgestellt wurde, insbesondre über eine Funkverbindung an elektronische Steuerungsmittel zu senden. Diese sind dazu gestaltet, abhängig von den Informationen eine Anweisung zum Ändern der Heiz- und/oder Kühlleistung an die Einstelleinrichtung zu senden, um den Nachtmodus ein- oder auszuschalten. Die Einstelleinrichtung weist Datenübertragungsmittel auf zum Empfangen einer Anweisung der elektronischen Steuerungsmittel.

Als ein Kerngedanke der Erfindung kann angesehen werden, die Heiz- und/oder Kühlleistung abhängig von einer Aktivität eines Benutzers zu steuern und diese Aktivität mit einem Smartphone zu erfassen. Es wurde erkannt, dass Smartphones hierfür besonders geeignet sind, weil Personen oder Benutzer ein Smartphone oftmals für einen Großteil des Tages direkt mit sich führen. Deshalb sind zur Feststellung einer Benutzeraktivität Smartphones gegenüber Messvorrichtungen überlegen, die ein Benutzer nicht typischerweise den Tag über mit sich trägt. Zudem bieten Smartphones den wesentlichen Vorteil, dass Hardware zur Funkübertragung von Informationen über eine Benutzeraktivität bereits vorhanden ist.

Als ein wesentlicher Vorteil kann erachtet werden, dass ein Benutzer nicht selbst eine Steuerungsanweisung zum Ein- oder Ausschalten eines Nachtmodus eingeben muss. Vielmehr wird von dem Programmcode und den elektronischen Steuerungsmitteln ein geeigneter Zeitpunkt für eine solche Steuerungsanweisung ermittelt und zu diesem Zeitpunkt wird eine Steuerungsanweisung an eine Einstelleinrichtung ausgegeben, welche die Heizungs- und/oder Klimaanlage steuert.

Ein zentraler Gedanke kann weiterhin darin gesehen werden, dass ein Benutzer für einen Wechsel in den Nachtmodus keinerlei Handlungen vornehmen muss. Vielmehr wird der Nachtmodus abhängig davon eingeschaltet, ob ein Ausbleiben einer Aktivität festgestellt wird.

Uhrzeiten des Ein- und Ausschaltens eines Nachtmodus können durch die Erfindung besonders flexibel festgelegt werden. Begibt sich ein Benutzer früher oder später als üblich zu Bett, wird ein Ausbleiben einer Aktivität entsprechend früher oder später registriert. Eine Uhrzeit zum Einschalten des Nachtmodus kann damit variabel eingestellt werden, ohne dass ein Benutzer jegliche Schaltbefehle an die Heizungs- und/oder Klimaanlage anordnen muss.

Dadurch kann eine besonders hohe Energieeffizienz erreicht werden. Unnötige Heiz- oder Kühlphasen können vermieden werden. Gleichzeitig kann weitestgehend vermieden werden, dass einem Benutzer eine als unangenehm empfundene Temperatur zugemutet wird.

Die Steuerungsvorrichtung der Erfindung weist als zentralen Bestandteil Programmcode oder Programmcodemittel auf, welche insbesondere auf einem Smartphone ausführbar sind. Der Programmcode ist auf einem nicht flüchtigen Datenspeicher abgelegt. Dieser kann der interne Speicher eines Smartphones sein oder eine wechselbare Speicherkarte für ein Smartphone. Möglich ist auch ein Datenspeicher, der nicht ohne Zubehör mit dem Smartphone verbunden werden kann. Die im Folgenden näher beschriebenen Funktionen des Programmcodes können entweder vollständig auf dem Smartphone erreicht werden. Alternativ kann der Programmcode dazu gestaltet sein, über eine Funkverbindung des Smartphones mit externem Programmcode einer anderen Recheneinrichtung, beispielsweise eines Servers, zusammenzuwirken. Die hier beschriebenen Funktionen des Programmcodes werden dann von dem Programmcode des Smartphones und dem externen Programmcode gemeinsam erreicht. Der Programmcode kann auch dazu gestaltet sein, insbesondere bei einer ersten Ausführung des Programmcodes, über eine Datenverbindung des Smartphones weiteren Programmcode zu laden und zu speichern, wobei erst zusammen mit dem weiteren Programmcode die hierin beschriebenen Funktionen des Programmcodes erreicht werden.

Als Smartphone wird ein tragbares, insbesondere in einer Hand tragbares elektronisches Gerät angesehen, das eine Datenübertragung per Funk durchführen kann, insbesondere eine Internetverbindung herstellen kann. So kann es sich bei dem Smartphone um ein, vorzugsweise internetfähiges, Mobiltelefon handeln.

Die elektronischen Steuerungsmittel, mit denen eine Anweisung zum Ändern der Heiz- und/oder Kühlleistung an die Einstelleinrichtung der Heizungs- und/oder Klimaanlage ausgegeben werden kann, können prinzipiell beliebiger Art sein und an einem beliebigen Ort vorhanden sein.

Bevorzugt sind die elektronischen Steuerungsmittel Bestandteil einer Serveranlage, mit welcher die Informationssignale vieler Smartphones verarbeitet und Anweisungen an zahlreiche Einstelleinrichtungen ausgegeben werden können. Vorteilhafterweise können hierdurch mit Software auf einer einzigen Serveranlage prinzipiell beliebig viele Heizungs- und/oder Klimaanlagen gesteuert werden. Eine Aktualisierung oder Verbesserung der Software betrifft damit automatisch alle zu steuernden Heizungs- und/oder Klimaanlagen. Zudem können hierdurch mit der Software der Serveranlage Daten zu zahlreichen Benutzern gespeichert und dazu genutzt werden, Entscheidungsregeln festzulegen, unter welchen Bedingungen beim Feststellen oder Ausbleiben einer Aktivität des Benutzers ein Ein- oder Ausschalten des Nachtmodus erfolgt.

Alternativ können die Steuerungsmittel aber auch als Computerprogramm ausgeführt sein, welches von dem Smartphone ausführbar ist. In diesem Fall sendet das Smartphone selbst eine Anweisung zum Ändern der Heiz- und/oder Kühlleistung an die Einstelleinrichtung.

Die Datenübertragungsmittel der Einstelleinrichtung können prinzipiell beliebiger Art sein und ermöglichen bevorzugt eine Internetverbindung. Hierfür können die Datenübertragungsmittel Funkmittel aufweisen, mit denen eine Internetverbindung direkt und/oder über ein lokales Netzwerk herstellbar ist. Grundsätzlich kann auch eine kabelgebundene Verbindung zu einem internetfähigen Gerät oder direkt zu den Steuerungsmitteln vorgesehen sein.

Unter einer Aktivität kann eine beliebige von einem Smartphone feststellbare Handlung eines Benutzers verstanden werden. Auch können hierunter weitere vom Smartphone feststellbare Umgebungsänderungen aufgefasst werden, welche nicht vom Benutzer selbst hervorgerufen sind.

Bevorzugt werden zum Überprüfen einer Aktivität des Benutzers eine oder mehrere der folgenden Überprüfungsmaßnahmen ausgeführt: Ermitteln eines Bewegens des Smartphones mit einem Beschleunigungssensor des Smartphones; Ermitteln einer Umgebungshelligkeit mit einem Lichtsensor des Smartphones oder mit einer am Smartphone befindlichen Solarzelle zur Stromerzeugung; Ermitteln einer Umgebungslautstärke mit einem Mikrofon des Smartphones; Ermitteln einer Ansteuerung eines Lautsprechers des Smartphones; Ermitteln einer Umgebungstemperatur mit einem Temperatursensor des Smartphones; Ermitteln des Batterieverbrauchs des Smartphones; Ermitteln, ob der Bildschirm des Smartphones eingeschaltet ist; Ermitteln eines Tastendrucks auf einer mechanischen Taste oder auf einer berührungsempfindlichen Fläche des Smartphones, insbesondere auf einem berührungsempfindlichen Bildschirm; Ermitteln eines Herstellens oder Trennens einer Verbindung zwischen dem Smartphone und einer Stromquelle oder einem externen Gerät.

Für diese Überprüfungsmaßnahmen kann vorteilhafterweise Hardware genutzt werden, die bei üblichen Smartphones bereits vorhanden ist. Dabei ist wesentlich, dass der Benutzer keine Aktivitäten vornehmen muss, die selbst einen Bezug zum Steuern der Heizungs- und/oder Klimaanlage haben. So kann bereits ein Benutzen des Smartphones, beispielsweise das Betätigen von Schaltflächen oder Programmen, als Aktivität erfasst werden. Besondere Vorteile bietet der Beschleunigungssensor. In diesem Fall kann eine Aktivität festgestellt werden, beispielsweise ein Gehen oder sonstiges Bewegen des Benutzers, ohne dass der Benutzer das Smartphone aktiv nutzen braucht.

So kann auf einen Aktivitätszustand genau dann geschlossen wird, wenn mindestens eine der folgenden Bedingungen erfüllt ist: das Smartphone wird für eine Zeitdauer bewegt, die eine vorgegebene Schwellwertdauer überschreitet; die Umgebungshelligkeit des Smartphones liegt für eine vorgegebene Zeitdauer über einer vorgegebenen Schwellwerthelligkeit; die Umgebungslautstärke des Smartphones liegt für eine vorgegebene Zeitdauer über einer vorgegebenen Schwellwertlautstärke; ein Lautsprecher des Smartphones erzeugt mindestens für eine vorgegebene Dauer akustische Signale; der Batterieverbrauch liegt innerhalb einer bestimmten Zeitdauer oberhalb eines Schwellwertes; ein Herstellen oder ein Trennen einer Verbindung zwischen dem Smartphone und einer Stromquelle wird festgestellt; eine Umgebungstemperatur liegt oberhalb einer vorgegebenen Grenztemperatur. Die Umgebungstemperatur eines Smartphones ist davon abhängig, ob dieses am Körper des Benutzers getragen wird. Somit kann bei einem Überschreiten der Grenztemperatur darauf geschlossen werden, dass das Smartphone am Körper getragen wird. Als Folge wird der Aktivitätszustand angenommen.

Eine besonders geringe Fehlerhäufigkeit beim Feststellen eines Aktivitätszustands kann erreicht werden, wenn für das Feststellen eines Aktivitätszustandes mehrere der vorgenannten Bedingungen erfüllt sein müssen. Alternativ oder zusätzlich kann für jede dieser Bedingungen eine Schwellwertdauer vorgegeben sein, die zum Feststellen eines Aktivitätszustands überschritten werden muss. Dabei kann gefordert sein, dass die Schwellwertdauer entweder am Stück erreicht wird oder mit möglichen Unterbrechungen. So unterliegt die Umgebungslautstärke üblicherweise größeren Schwankungen und übersteigt nur selten ununterbrochen eine vorgegebene Schwellwertdauer.

Durch diese Maßnahmen wird ein Feststellen eines Aktivitätszustands vermieden, während ein Benutzer schläft oder nachts nur kurzzeitig aktiv ist, um dann weiter zu schlafen. Nimmt ein Benutzer beispielsweise bei einem nächtlichen Erwachen das Smartphone kurzzeitig in die Hand, um nach der Uhrzeit zu schauen, werden eine Bewegung des Smartphones, ein Tastendruck, eine Bildschirmeinschaltung und/oder ein erhöhter Energieverbrauch durch die Bildschirmeinschaltung registriert. Dennoch kann ein fälschliches Feststellen eines Aktivitätszustands, insbesondere durch die Schwellwertdauern, vermieden werden.

Bei einer Auswertung des Batterieverbrauchs kann vorgesehen sein, dass nur der Batterieverbrauch von bestimmten Komponenten des Smartphones erfasst wird, beispielsweise vom Bildschirm. Ausgeschlossen kann ein Batterieverbrauch für eine Funkübertragung sein, insbesondere für eine Internetverbindung. Programmaktualisierungen werden oftmals automatisch und daher auch nachts ausgeführt. Indem ein solcher Batterieverbrauch ausgenommen ist, wird ausgeschlossen, dass fälschlicherweise auf eine Aktivität des Benutzers geschlossen wird.

Es kann vorgesehen sein, dass auf den Ruhezustand des Benutzers geschlossen wird, wenn für eine vorbestimmte Zeitdauer keine Aktivität festgestellt worden ist.

Außerdem kann vorgesehen sein, dass auf den Ruhezustand des Benutzers geschlossen wird, wenn das Smartphone ausgeschaltet wird und/oder eine bestimmte Profileinstellung des Smartphones ausgewählt wird. Diese Maßnahmen sind sinnvoll, wenn ein Benutzer vorm Schlafengehen das Smartphone gewöhnlich ausschaltet oder die Profileinstellung ändert. Unter Profileinstellungen sind auswählbare Sätze an Einstellungen zu verstehen. Diese können insbesondere die Lautstärke des Klingeltons für eingehende Anrufe und SMS umfassen sowie die Einstellung, ob ein Vibrationsalarm für eingehende Anrufe und SMS aktiviert ist. Alternativ oder zusätzlich kann eine Profileinstellung eine Einstellung umfassen, ob eine Funkverbindung zu einem Telefon- und/oder Internetprovider hergestellt wird. Dies wird unter dem Betriebssystem Android TM der Firma Google Inc. als Einstellung "Flight mode" bezeichnet.

Bei bevorzugten Varianten des erfindungsgemäßen Verfahrens und der erfindungsgemäßen Steuerungsvorrichtung können Entscheidungsregeln, wann auf eine Ruhezustand geschlossen wird und wann der Nachtmodus ein- und ausgeschaltet wird, abhängig von gesammelten Informationen zu Aktivitäten des Benutzers geändert werden. Wird beispielsweise festgestellt, dass ein Benutzer eine bestimmte Profileinstellung immer dann auswählt, wenn kurz darauf mit den bisherigen Entscheidungsregeln der Nachtmodus eingestellt wird, so können die bisherigen Entscheidungsregeln damit ergänzt werden, dass bei einer Auswahl dieser Profileinstellung der Nachtmodus eingestellt wird.

Als eine zusätzliche Bedingung, die zum Schließen auf den Ruhezustand oder zum Einstellen des Nachtmodus erfüllt sein muss, kann vorgesehen sein, dass eine aktuelle Uhrzeit innerhalb eines vorgegebenen Zeitintervalls liegt. Das vorgegebene Zeitintervall kann für verschiedene Wochentage unterschiedlich festgelegt sein. So kann beispielsweise vermieden werden, dass auf den Nachtmodus geschaltet wird, wenn ein Benutzer tagsüber sein Smartphone in seiner Wohnung ablegt, aber weiterhin aktiv ist.

Um Fehler zu vermeiden, wenn ein Benutzer sein Smartphone gerade nicht bei sich trägt, kann auch mindestens eine der folgenden Zusatzmaßnahmen durchgeführt werden: eine Raumhelligkeit in einem von der Heizungs- und/oder Klimaanlage zu temperierenden Raum wird gemessen; eine Raumlautstärke in einem von der Heizungs- und/oder Klimaanlage zu temperierenden Raum wird gemessen; eine Bewegung eines Benutzers wird mit einem Bewegungsmelder in einem vom Schlafzimmer verschiedenen Raum gemessen; eine Computerbenutzung von einem Computer, der sich in einem von der Heizungs- und/oder Klimaanlage zu temperierenden Raum befindet, wird festgestellt; und eine E-Mail- oder Internetnutzung des Benutzers wird festgestellt. Diese Zusatzmaßnahmen können mit einem oder mehreren stationären Sensoren durchgeführt werden, welche insbesondere ortsfest in einem mit der Heizungs- und/oder Klimaanlage zu temperierenden Raum vorgesehen sein können. Auf den Aktivitätszustand kann sodann geschlossen werden, wenn die Raumhelligkeit einen vorgegebenen Schwellwert, insbesondere für eine vorgegebene Zeitdauer, übersteigt, wenn die Raumlautstärke einen vorgegebenen Schwellwert, insbesondere für eine vorgegebene Zeitdauer, übersteigt, wenn eine Bewegung in einem vom Schlafzimmer verschiedenen Raum, insbesondere über mindestens eine vorgegebene Zeitdauer hinweg, gemessen wird, wenn eine Computerbenutzung festgestellt wird, oder wenn eine E-Mail- oder Internetnutzung des Benutzers festgestellt wird.

Grundsätzlich sollte der Nachtmodus nur dann eingestellt werden, wenn ein Benutzer sich auch tatsächlich innerhalb der Räume befindet, die von der Heizungs- und/oder Klimaanlage zu temperieren sind, und sich dort schlafen legt.

Wird auch im Schlafzimmer ein weiterer Bewegungsmelder angebracht, so kann zwischen einem Aufenthalt eines Benutzers in einem Schlafzimmer oder einem anderen Raum im selben Gebäude unterschieden werden. Hierfür können grundsätzlich auch andere stationäre Sensoren sowohl im Schlafzimmer als auch in anderen Räumen installiert werden. Es kann vorgesehen sein, den Nachtmodus nur dann einzuschalten, wenn als zusätzliche Bedingung mit den stationären Sensoren zuletzt eine Anwesenheit des Benutzers im Schlafzimmer festgestellt worden ist.

Hält sich der Benutzer außerhalb der zu temperierenden Räume auf und wird ein Ruhezustand festgestellt, beispielsweise weil sich das Smartphone für längere Zeit unbewegt in einem Rucksack befindet, soll der Nachtmodus nicht eingestellt werden. Daher kann vorgesehen sein, dass mit dem Smartphone der Ort des Smartphones ermittelt wird, dass eine Entfernung zwischen dem Ort des Smartphones und dem Ort der Heizungs- und/oder Klimaanlage oder einem Schlafzimmer bestimmt wird und dass der Nachtmodus nur dann eingestellt wird, wenn die Entfernung geringer als ein Toleranzabstand ist. Der Toleranzabstand kann abhängig von der Genauigkeit der Ortsbestimmung gewählt sein.

Das Smartphone kann mit verschiedenen Maßnahmen seine Position bestimmen. Hiervon kann die momentan verfügbare Möglichkeit ausgewählt werden, die den geringsten Energiebedarf mit sich bringt. Beispielsweise kann das Smartphone wählen zwischen einer Ortung basierend auf GPS, dem Empfang eines bekannten WLAN-Netzes oder einem Triangulationsverfahren, das empfangene Signale von Mobilfunkmasten eines Mobilfunkbetreibers nutzt.

Somit kann erkannt werden, ob sich der Benutzer im Bereich eines Gebäudes aufhält, in dem die Heizungs- und/oder Klimaanlage installiert ist. Bei einer hohen Genauigkeit der Ortsbestimmung kann auch zwischen einem Aufenthalt eines Benutzers im Schlafzimmer und in einem anderen Raum unterschieden werden. Hierfür können prinzipiell beliebige Indoor-Lokalisierungsverfahren genutzt werden. Bevorzugt wird ein Signalempfang des Smartphones von einem WLAN oder WiFi-Netz verwendet. Abhängig von einer Signalstärke und/oder einer Signallaufzeit kann zwischen einem Aufenthalt in verschiedenen Räumen unterschieden werden. Hierfür kann ein Vergleich mit einem Referenzwert einer Signalstärke und/oder einer Signallaufzeit bei Aufenthalt im Schlafzimmer genutzt werden. Der Referenzwert kann vorab gespeichert werden. Er kann auch automatisch für denjenigen Ort ermittelt und gespeichert worden sein, an dem sich der Benutzer aufhielt, wenn mit dem erfindungsgemäßen Verfahren der Nachtmodus eingestellt wurde.

Zum energiesparenden Betrieb des Smartphones kann weiterhin vorgesehen sein, dass das Überprüfen einer Aktivität des Benutzers nur dann erfolgt, wenn die Entfernung des Smartphones zum Ort der Heizungs- und/oder Klimaanlage oder zum Schlafzimmer kleiner als der Toleranzabstand ist. Dass ein Überprüfen der Aktivität abhängig vom Ort des Smartphones ist, kann auch auf bestimmte Überprüfungsmaßnahmen beschränkt sein. Manche Überprüfungsmaßnahmen erhöhen den Energiebedarf des Smartphones nennenswert, so beispielsweise die Nutzung des Beschleunigungssensors. Diese Überprüfungsmaßnahmen können ortsabhängig durchgeführt werden. Andere Überprüfungsmaßnahmen erhöhen kaum oder gar nicht den Energiebedarf. Dies kann auf die Überprüfungsmaßnahmen zutreffen, ob der Bildschirm eingeschaltet ist und ob eine Verbindung zwischen dem Smartphone und einer Stromquelle hergestellt oder getrennt wird. Solche Überprüfungsmaßnahmen können auch ortsunabhängig durchgeführt werden.

Alternativ oder zusätzlich kann auch vorgesehen sein, alle oder einige der vorgenannten Zusatzmaßnahmen nur dann auszuführen, wenn der Abstand des Smartphones zu der Heizungs- und/oder Klimaanlage oder eines zu temperierenden Schlafzimmers geringer als ein Toleranzabstand ist. Werden diese Zusatzmaßnahmen mit batteriebetriebenen Geräten ausgeführt, so kann auch hier die Batterielaufzeit verlängert werden, indem ein unnötiges Überprüfen einer Benutzeraktivität vermieden wird.

Daher kann ein Nachtmodus immer dann eingestellt werden, wenn entweder ein Ruhezustand eines Benutzers festgestellt wird oder wenn zusätzlich weitere Bedingungen erfüllt sind, etwa in Bezug auf den Ort des Smartphones oder eine momentane Uhrzeit.

Zweckmäßigerweise kann vorgesehen sein, dass der Nachtmodus ausgeschaltet wird, wenn ein Aktivitätszustand eines Benutzers festgestellt wird. In dieser Situation wird ein morgentliches Aufstehen des Benutzers erwartet. Spätestens zu dieser Zeit sollte eine Heizungsanlage verstärkt heizen beziehungsweise eine Klimaanlage verstärkt kühlen. Weil aber Heizungs- und/oder Klimaanlagen eine bestimmte Zeit benötigen, um eine gewünschte Solltemperatur zu erreichen, sollte der Nachtmodus möglichst bereits ausgeschaltet werden, bevor ein Aktivitätszustand nach einem Ruhezustand festgestellt wird. Hierzu kann vorgesehen sein, dass zunächst als Referenzschlafdauern eines Benutzers die Dauern von Ruhezuständen des Benutzers erfasst und gespeichert werden und/oder dass als Referenzaufstehuhrzeiten Uhrzeiten erfasst und gespeichert werden, zu denen ein Wechsel von einem Ruhezustand zu einem Aktivitätszustand festgestellt wird. Sodann erfolgt zum Ausschalten des Nachtmodus, bevor ein Aktivitätszustand des Benutzers festgestellt wird, das Ausschalten des Nachtmodus abhängig von einem Verhältnis einer momentanen Schlafdauer zu den Referenzschlafdauern und/oder einem Verhältnis einer momentanen Uhrzeit zu den Referenzaufstehuhrzeiten. Die Referenzschlafdauern und/oder aufstehuhrzeiten können wiederum für verschiedene Wochentage separat gespeichert werden.

Ein Ausschalten des Nachtmodus kann insbesondere dann erfolgen, sobald nur noch eine Differenzdauer die momentane Uhrzeit oder die momentane Dauer des Ruhezustands von einer Referenzaufstehuhrzeit oder -schlafdauer trennt. Um ein unnötig frühes Ausschalten des Nachtmodus zu vermeiden, kann diese Differenzdauer auch abhängig von einer Differenz zwischen einer aktuellen Raumtemperatur und einer Solltemperatur nach Ausschalten des Nachtmodus gewählt sein. Die Differenzdauer kann demnach umso größer gewählt sein, je größer eine geplante Temperaturänderung nach dem Ausschalten des Nachtmodus ist.

Es können auch Zusatzbedingungen vorgesehen sein, die zusätzlich zum Feststellen eines Aktivitätszustands erfüllt sein müssen, um den Nachtmodus auszuschalten. Dadurch kann vermieden werden, dass bei einem kurzzeitigen Erwachen des Benutzers in der Nacht und einer kurzen Aktivität unnötigerweise der Nachtmodus ausgeschaltet wird. Hierfür kann eine Sperrzeit bestimmt werden, in welcher ein Ende der Schlafphase des Benutzers unwahrscheinlich ist und ein festgestellter Aktivitätszustand nicht zu einem Ausschalten des Nachtmodus führt.

So kann vorgesehen sein, dass zunächst als Referenzschlafdauer eine Dauer von mindestens einem Ruhezustand des Benutzers erfasst und gespeichert wird. Alternativ oder zusätzlich kann als Referenzeinschlafuhrzeit und als Referenzaufstehuhrzeit gespeichert werden, wann ein Wechsel zu einem Ruhezustand und wann ein Wechsel zu einem Aktivitätszustand festgestellt wird. Sodann wird aus einer Uhrzeit des letzten Wechsels zwischen einem Aktivitäts- und einem Ruhezustand sowie aus der Referenzschlafdauer und/oder den Referenzeinschlaf- und aufstehuhrzeiten eine Sperrzeit bestimmt. Innerhalb dieser wird ein Wechsel zwischen dem Aktivitäts- und dem Ruhezustand als nicht plausibel eingestuft. Nur außerhalb der Sperrzeit wird dann ein Ein- oder Ausschalten des Nachtmodus erlaubt.

Dabei kann vorgesehen sein, dass während der Sperrzeit ein Ein- oder Ausschalten des Nachtmodus dennoch erlaubt wird, wenn eine bestimmte Häufigkeit von Aktivitäten oder eine vorgegebene Dauer einer Aktivität festgestellt wird.

Weil zu heizende oder kühlende Räume häufig von zwei oder mehr Personen bewohnt werden, können die elektronischen Steuerungsmittel den Nachtmodus auch abhängig von einem jeweiligen Ruhe- oder Aktivitätszustand mehrerer Benutzer ein- oder ausschalten. Dabei wird für die verschiedenen Benutzer über jeweils ein Smartphone auf einen Ruhezustand oder einen Aktivitätszustand des jeweiligen Benutzers geschlossen.

Als Voraussetzung für ein Einschalten des Nachtmodus kann festgelegt sein, dass für alle teilnehmenden Benutzer der Ruhezustand festgestellt werden muss. So kann sichergestellt werden, dass nicht bereits der Nachtmodus eingeschaltet wird, wenn ein Ehepartner schlafen gegangen ist und sich der andere Ehepartner erst später schlafen legt.

Ein Ausschalten des Nachtmodus kann hingegen bei mehreren Benutzern bereits dann erfolgen, wenn für nur einen der Benutzer die Voraussetzungen zum Ausschalten des Nachtmodus vorliegen, beispielsweise wenn für nur einen der Benutzer ein Aktivitätszustand festgestellt wird. So kann vermieden werden, dass der Nachtmodus fortgeführt wird, wenn ein Ehepartner morgens aufsteht und der andere Ehepartner noch schläft.

Werden mehrere Benutzer berücksichtigt, so erfolgt zum energiesparenden Betrieb des jeweiligen Smartphones das Überprüfen einer Aktivität des jeweiligen Benutzers bevorzugt nur dann, wenn der jeweilige Abstand aller Smartphones zu der Heizungs- und/oder Klimaanlage oder zu einem zu temperierenden Schlafzimmer kleiner als ein Toleranzabstand ist.

Bei einer besonders bevorzugten Ausführungsform der erfindungsgemäßen Steuerungsvorrichtung ist diese zum automatischen Durchführen des Verfahrens oder einer der Verfahrensvarianten gemäß der Erfindung eingerichtet.

Die Erfindung betrifft auch eine Anlage mit einer Steuerungsvorrichtung gemäß der Erfindung und mit einem Smartphone und/oder einer Heizungs- und/oder Klimaanlage.

Weitere Eigenschaften der Erfindung werden mit Bezug auf die beigefügte Figur erläutert.

### KURZBESCHREIBUNG DER FIGUR

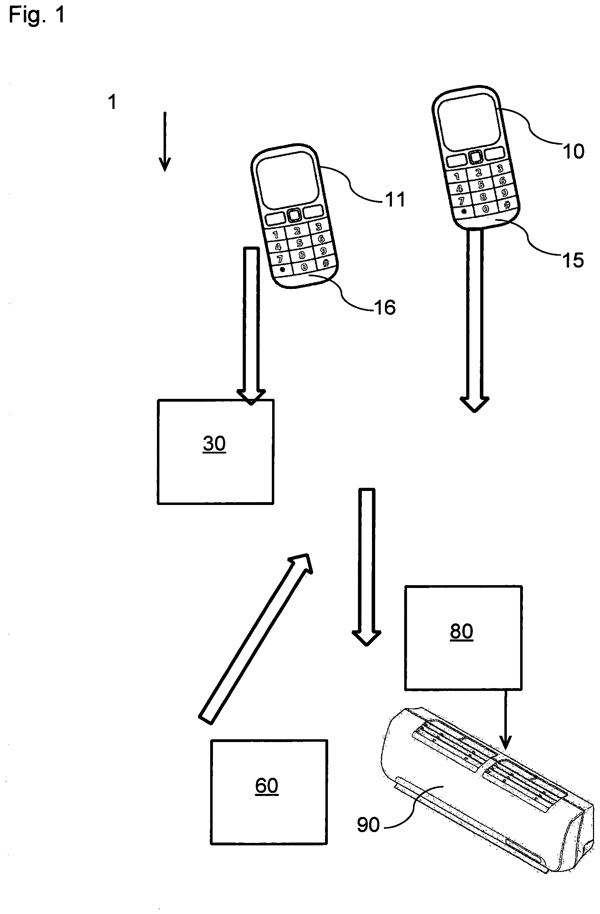

- Figur 1: zeigt schematisch ein Ausführungsbeispiel einer erfindungsgemäßen Steuerungsvorrichtung.

### DETAILLIERTE FIGURENBESCHREIBUNG

In Figur 1 ist schematisch eine erfindungsgemäße Steuerungsvorrichtung 1 zum Ein- und Ausschalten eines Nachtmodus einer Heizungs- und/oder Klimaanlage 90 gezeigt. Die Heizungs- und/oder Klimaanlage 90 temperiert unter anderem ein Schlafzimmer von einer oder mehrerer Personen. Wenn sich die Personen schlafen legen, soll die Heizungs- und/oder Klimaanlage 90 in einem Nachtmodus mit geringerem Energieverbrauch betrieben werden.

Erfindungsgemäß soll ein Ein- und Ausschalten des Nachtmodus abhängig von Aktivitäten und vom Ausbleiben von Aktivitäten einer oder mehrerer Personen erfolgen. Im dargestellten Beispiel erfolgt die Steuerung abhängig von der Aktivität zweier Personen oder Benutzer, welche jeweils über ein Smartphone 10, 11 verfügen.

Die Steuerungsvorrichtung 1 umfasst als wesentliche Komponenten Programmcode auf einem nicht flüchtigen Datenspeicher 15, 16, elektronische Steuerungsmittel 30 und eine Einstelleinrichtung 80.

Die Einstelleinrichtung 80 ist mit der Heizungs- und/oder Klimaanlage 90 verbunden und reduziert oder erhöht deren Heiz- oder Kühlleistung, wenn der Nachtmodus ein- oder ausgestellt wird. In diesem Zusammenhang ist der Begriff des Steuerns breit zu verstehen und kann auch ein Regeln umfassen.

Mit Hilfe des Programmcodes wird bestimmt, wann der Nachtmodus ein- und ausgestellt werden soll. Hierzu wird der Programmcode auf Smartphones 10, 11 der Benutzer ausgeführt und ermittelt Aktivitäten der Benutzer.

Wird eine Aktivität festgestellt, beispielsweise wenn ein Beschleunigungssensor eines der Smartphones 10, 11 ein Bewegen des Smartphones misst, so schließt der Programmcode auf einen Aktivitätszustand des Benutzers.

Wird hingegen für eine vorbestimmte Zeitdauer keine Aktivität festgestellt, wird auf einen Ruhezustand des Benutzers geschlossen. Außer einem Beschleunigungssensor werden bevorzugt weitere Messeinrichtungen eines Smartphones zur Feststellung von Benutzeraktivitäten genutzt.

Der Programmcode veranlasst, dass Information darüber, ob ein Aktivitäts- oder Ruhezustand festgestellt wurde, mit den Smartphones 10, 11 zu den Steuerungsmitteln 30 gesendet wird. Dies kann über ein WLAN und/oder eine Internetverbindung erfolgen.

Die Steuerungsmittel 30 sind hier durch einen oder mehrere Computer oder Server gebildet und bestimmt abhängig von den Informationen zu den Ruhe- oder Aktivitätszuständen der Benutzer, ob ein Nachtmodus ein- oder ausgestellt werden soll. Ein entsprechender Befehl wird sodann von den Steuerungsmitteln 30 zu der Einstelleinrichtung 80 gesendet.

Anstelle der abgebildeten Ausführung kann der Programmcode die Informationen auch an Steuerungsmittel leiten, die in den Smartphones integriert sind, beispielsweise durch Software.

Vorteilhafterweise kann die Steuerungsvorrichtung 1 das Ein- und Ausstellen des Nachtmodus variabel an das Verhalten der Benutzer anpassen. So wird der Nachtmodus in der Regel nur dann eingestellt, wenn sich auch tatsächlich mindestens einer der Benutzer zur Ruhe begeben hat.

Die Voraussetzungen für ein Einschalten des Nachtmodus brauchen nur dann überprüft werden, wenn sich die Benutzer auch im Bereich des Schlafzimmers aufhalten, das von der Heizungs- und/oder Klimaanlage 90 temperiert wird.

Daher veranlasst der Programmcode, dass die Smartphones 10, 11 ihre Position ermitteln. Zudem ist im Programmcode eine Ortsangabe der Heizungs- und/oder Klimaanlage 90 hinterlegbar. Mit der Ortsangabe vergleicht der Programmcode die momentane Position der Smartphones 10, 11. Ein Ermitteln von Aktivitäten und/ oder ein Weiterleiten von Informationen an die Steuerungsmittel 30 erfolgt nur, wenn ein Abstand der momentanen Position zur hinterlegten Ortsangabe geringer als ein Grenzwert ist.

Solange die Steuerungsmittel 30 zu einem der Benutzer die Information erhält, dass zuletzt ein Aktivitätszustand festgestellt wurde, bleibt der Nachtmodus ausgeschaltet. Erst wenn für beide Benutzer ein Ruhezustand festgestellt wurde, geben die Steuerungsmittel 30 eine Anweisung zum Wechseln in den Nachtmodus aus. Ein Beenden des Nachtmodus können die Steuerungsmittel 30 beispielsweise spätestens dann veranlassen, wenn erneut ein Aktivitätszustand für einen der Benutzer festgestellt worden ist.

Um weitere Informationen über Aktivitäten eines Benutzers zu erfassen, können auch ein oder mehrere stationäre Sensoren 60 vorgesehen sein. Diese sind bevorzugt in einem der zu temperierenden Räume angebracht. Sie können beispielsweise eine Umgebungshelligkeit und/oder -lautstärke erfassen. Bei erhöhter Umgebungshelligkeit und/oder -lautstärke kann auf einen Aktivitätszustand des Benutzers geschlossen werden. Auch kann so unterschieden werden, ob sich ein Benutzer in einem Schlafzimmer oder bloß einem daran angrenzenden Raum aufhält. Als zusätzliche Bedingung zum Einschalten des Nachtmodus muss eine Anwesenheit des Benutzers im Schlafzimmer erkannt worden sein.

Im dargestellten Beispiel erfolgt eine Kommunikation über das Internet zunächst zwischen einem Smartphone 10, 11 und den Steuerungsmitteln 30, die als Server ausgeführt ist. Sodann erfolgt eine Kommunikation über das Internet zwischen den Steuerungsmitteln 30 und der Einstelleinrichtung 80, die bei der Heizungs- und/ oder Klimaanlage 90 angebracht ist. Die Einstelleinrichtung 80 steuert entsprechend einer Anweisung der Steuerungsmittel 30 schließlich die Heizungs- und/oder Klimaanlage 90. Weitere Komponenten zur Datenübertragung können zwischen den beschriebenen Komponenten eingesetzt werden.

Vorteilhafterweise kann mit der erfindungsgemäßen Steuerungsvorrichtung und dem erfindungsgemäßen Verfahren erreicht werden, dass Einstellzeiten eines energiesparenden Nachtmodus einer Heizungs- und/oder Klimaanlage mit tatsächlichen Schlafzeiten eines oder mehrerer Benutzer weitgehend übereinstimmen. Dadurch können Energieeinsparungen erzielt werden, wobei zudem für den oder die Benutzer angenehme Raumtemperaturen eingestellt werden.

## Patentansprüche

1. Verfahren zum Ein- und Ausschalten eines Nachtmodus einer Heizungs- und/oder Klimaanlage (90),
wobei ein Energieverbrauch der Heizungs- und/oder Klimaanlage (90) beim Einschalten des Nachtmodus verringert und beim Ausschalten des Nachtmodus erhöht wird,
wobei mit einem Smartphone (10, 11) eine Aktivität eines Benutzers des Smartphones (10, 11) erfasst wird,
**dadurch gekennzeichnet,**
**dass** mit Programmcode beim Feststellen einer Aktivität auf einen Aktivitätszustand des Benutzers geschlossen wird und beim Ausbleiben einer Aktivität auf einen Ruhezustand des Benutzers geschlossen wird, wobei der Programmcode auf einem nicht flüchtigen Datenspeicher (15, 16) gespeichert ist, und
**dass** elektronische Steuerungsmittel (30) den Nachtmodus abhängig davon ein- oder ausschalten, ob ein Ruhezustand oder Aktivitätszustand des Benutzers festgestellt wurde.

2. Verfahren nach Anspruch 1,
wobei zum Überprüfen einer Aktivität des Benutzers eine oder mehrere der folgenden Überprüfungsmaßnahmen ausgeführt werden:
- Ermitteln eines Bewegens des Smartphones (10, 11) mit einem Beschleunigungssensor des Smartphones (10, 11),
- Ermitteln einer Umgebungshelligkeit mit einem Lichtsensor des Smartphones (10, 11) oder mit einer am Smartphone (10, 11) befindlichen Solarzelle zur Stromerzeugung,
- Ermitteln einer Umgebungslautstärke mit einem Mikrofon des Smartphones (10, 11),
- Ermitteln einer Ansteuerung eines Lautsprechers des Smartphones (10, 11),
- Ermitteln einer Umgebungstemperatur mit einem Temperatursensor des Smartphones (10, 11),
- Ermitteln des Batterieverbrauchs des Smartphones (10, 11),
- Ermitteln, ob der Bildschirm des Smartphones (10, 11) eingeschaltet ist,
- Ermitteln eines Tastendrucks auf einer mechanischen Taste oder auf einer berührungsempfindlichen Fläche des Smartphones (10, 11) und
- Ermitteln eines Herstellens oder Trennens einer Verbindung zwischen dem Smartphone (10, 11) und einer Stromquelle.

3. Verfahren nach Anspruch 2,
wobei auf einen Aktivitätszustand geschlossen wird, wenn mindestens eine der folgenden Bedingungen erfüllt ist:
das Smartphone (10, 11) wird für eine Zeitdauer bewegt, die eine vorgegebene Schwellwertdauer überschreitet,
die Umgebungshelligkeit des Smartphones (10, 11) liegt für eine vorgegebene Zeitdauer über einer vorgegebenen Schwellwerthelligkeit,
die Umgebungslautstärke des Smartphones (10, 11) liegt für eine vorgegebene Zeitdauer über einer vorgegebenen Schwellwertlautstärke,
ein Lautsprecher des Smartphones (10, 11) erzeugt mindestens für eine vorgegebene Dauer akustische Signale,
eine Umgebungstemperatur liegt oberhalb einer vorgegebenen Grenztemperatur,
der Batterieverbrauch liegt innerhalb einer bestimmten Zeitdauer oberhalb eines Schwellwertes,
ein Herstellen oder ein Trennen einer Verbindung zwischen dem Smartphone (10, 11) und einer Stromquelle wird festgestellt.

4. Verfahren nach einem der Ansprüche 1 bis 3,
wobei auf den Ruhezustand des Benutzers geschlossen wird, wenn für eine vorbestimmte Zeitdauer keine Aktivität festgestellt worden ist.

5. Verfahren nach einem der Ansprüche 1 bis 4,
wobei auf den Ruhezustand des Benutzers geschlossen wird, wenn das Smartphone (10, 11) ausgeschaltet wird und/oder eine bestimmte Profileinstellung des Smartphones (10, 11) ausgewählt wird.

6. Verfahren nach einem der Ansprüche 1 bis 5,
wobei mindestens eine der folgenden Zusatzmaßnahmen durchgeführt wird:
- eine Raumhelligkeit in einem von der Heizungs- und/oder Klimaanlage (90) zu temperierenden Raum wird gemessen,
- eine Raumlautstärke in einem von der Heizungs- und/oder Klimaanlage (90) zu temperierenden Raum wird gemessen,
- eine Bewegung eines Benutzers wird mit einem Bewegungsmelder in einem von einem Schlafzimmer verschiedenen Raum gemessen,
- eine Computerbenutzung von einem Computer, der sich in einem von der Heizungs- und/oder Klimaanlage (90) zu temperierenden Raum befindet, wird festgestellt und
- eine E-Mail- oder Internetnutzung des Benutzers wird festgestellt und
wobei auf den Aktivitätszustand geschlossen wird,
- wenn die Raumhelligkeit einen vorgegebenen Schwellwert, insbesondere für eine vorgegebene Zeitdauer, übersteigt, oder
- wenn die Raumlautstärke einen vorgegebenen Schwellwert, insbesondere für eine vorgegebene Zeitdauer, übersteigt, oder
- wenn eine Bewegung in dem vom Schlafzimmer verschiedenen Raum, insbesondere über mindestens eine vorgegebene Zeitdauer hinweg, gemessen wird,
- wenn eine Computerbenutzung festgestellt wird, oder
- wenn eine E-Mail- oder Internetnutzung des Benutzers festgestellt wird.

7. Verfahren nach einem der Ansprüche 1 bis 6,
wobei mit dem Smartphone (10, 11) der Ort des Smartphones (10, 11) ermittelt wird,
wobei eine Entfernung zwischen dem Ort des Smartphones (10, 11) und dem Ort der Heizungs- und/oder Klimaanlage (90) oder eines zu temperierenden Schlafzimmers bestimmt wird,
wobei der Nachtmodus nur dann eingestellt wird, wenn die Entfernung geringer als ein Toleranzabstand ist.

8. Verfahren nach einem der Ansprüche 1 bis 7,
wobei zum energiesparenden Betrieb des Smartphones (10, 11) das Überprüfen einer Aktivität des Benutzers nur dann erfolgt, wenn eine Entfernung zwischen dem Smartphone (10, 11) und der Heizungs- und/oder Klimaanlage (90) oder einem zu temperierenden Schlafzimmer geringer als ein Toleranzabstand ist.

9. Verfahren nach einem der Ansprüche 1 bis 8,
wobei als Referenzschlafdauern eines Benutzers die Dauern von Ruhezuständen des Benutzers erfasst und gespeichert werden und/oder wobei als Referenzaufstehuhrzeiten Uhrzeiten erfasst und gespeichert werden, zu denen ein Wechsel von einem Ruhezustand zu einem Aktivitätszustand festgestellt wird,
wobei zum Ausschalten des Nachtmodus, bevor ein Aktivitätszustand des Benutzers festgestellt wird, das Ausschalten des Nachtmodus abhängig von einem Verhältnis einer momentanen Schlafdauer zu den Referenzschlafdauern und/oder einem Verhältnis einer momentanen Uhrzeit zu den Referenzaufstehuhrzeiten erfolgt.

10. Verfahren nach einem der Ansprüche 1 bis 9,
wobei als Referenzschlafdauer eine Dauer von mindestens einem Ruhezustand des Benutzers erfasst und gespeichert wird und/oder wobei als Referenzeinschlafuhrzeit und als Referenzaufstehuhrzeit gespeichert wird, wann ein Wechsel zu einem Ruhezustand und wann ein Wechsel zu einem Aktivitätszustand festgestellt wird,
wobei aus einer Uhrzeit des letzten Wechsels zwischen einem Aktivitäts- und einem Ruhezustand sowie aus der Referenzschlafdauer und/oder der Referenzeinschlaf- und der Referenzaufstehuhrzeit eine Sperrzeit bestimmt wird, innerhalb der ein Wechsel zwischen dem Aktivitäts- und dem Ruhezustand als nicht plausibel eingestuft wird, und
wobei nur außerhalb der Sperrzeit ein Ein- oder Ausschalten des Nachtmodus erlaubt wird.

11. Verfahren nach einem der Ansprüche 1 bis 10,
wobei die elektronischen Steuerungsmittel (30) den Nachtmodus abhängig von einem jeweiligen Ruhe- oder Aktivitätszustand mehrerer Benutzer ein- oder ausschalten,
wobei für die verschiedenen Benutzer über jeweils ein Smartphone (10, 11) auf einen Ruhezustand oder einen Aktivitätszustand des jeweiligen Benutzers geschlossen wird.

12. Verfahren nach einem der Ansprüche 1 bis 11,
wobei zum energiesparenden Betrieb des jeweiligen Smartphones (10, 11) das Überprüfen einer Aktivität des jeweiligen Benutzers nur dann erfolgt, wenn die jeweilige Entfernung aller Smartphones (10, 11) zu der Heizungs- und/oder Klimaanlage (90) oder zu einem zu temperierenden Schlafzimmer geringer als ein Toleranzabstand ist.

13. Steuerungsvorrichtung zum Ein- und Ausschalten eines Nachtmodus einer Heizungs- und/oder Klimaanlage (90),
wobei ein Energieverbrauch der Heizungs- und/oder Klimaanlage (90) beim Einschalten des Nachtmodus verringert und beim Ausschalten des Nachtmodus erhöht wird,
wobei die Steuerungsvorrichtung eine Einstelleinrichtung (80) aufweist, die mit der Heizungs- und/oder Klimaanlage (90) verbindbar ist zum Ändern derer Heiz- und/oder Kühlleistung,
wobei die Einstelleinrichtung (80) Datenübertragungsmittel aufweist zum Empfangen einer Anweisung von elektronischen Steuerungsmitteln (30), wobei die Steuerungsvorrichtung einen nicht flüchtigen Datenspeicher (15, 16) mit Programmcode aufweist, der von einem Smartphone (10, 11) ausführbar ist,
wobei der Programmcode dazu gestaltet ist, bei Ausführung auf dem Smartphone (10, 11)
- eine Aktivität eines Benutzers des Smartphones (10, 11) zu erfassen, **dadurch gekennzeichnet, dass** der Programmcode außerdem dazu gestaltet ist, bei Ausführung auf dem Smartphone (10, 11)
- beim Feststellen einer Aktivität auf einen Aktivitätszustand des Benutzers zu schließen,
- beim Ausbleiben einer Aktivität auf einen Ruhezustand des Benutzers zu schließen und
- Informationen darüber, ob ein Ruhezustand oder ein Aktivitätszustand festgestellt wurde, an die elektronischen Steuerungsmittel (30) zu senden, die dazu gestaltet sind, abhängig von diesen Informationen eine Anweisung zum Ändern der Heiz- und/oder Kühlleistung an die Einstelleinrichtung (80) zu senden, um den Nachtmodus ein- oder auszuschalten.

14. Steuerungsvorrichtung nach Anspruch 13,
wobei die Steuerungsvorrichtung zum automatischen Durchführen des Verfahrens nach einem der Ansprüche 1 bis 12 eingerichtet ist.

## Claims

1. Method for switching on and off a night mode of a heating and / or air conditioning system (90),
wherein energy consumption of the heating and / or air conditioning system (90) is reduced when the night mode is switched on and increased when the night mode is switched off,
wherein an activity of a user of a smartphone (10, 11) is detected with the smartphone (10, 11),
**characterized in that**:
with program code an activity state of the user is inferred if an activity is noticed and a state of rest of the user is inferred in the absence of activity,
wherein the program code is stored in a non-volatile data memory (15, 16), and
electronic control means (30) switch on or off the night mode as a function of whether a state of rest or an activity state of the user has been noticed.

2. Method according to claim 1, wherein one or more of the following checking measures are carried out to check an activity of the user:
- detect a movement of the smartphone (10, 11) with an acceleration sensor of the smartphone (10, 11),
- detect an environment brightness with a light sensor of the smartphone (10, 11) or with a solar cell located on the smartphone (10, 11) for power generation,
- detect an environment volume with a microphone of the smartphone (10, 11),
- detect an activation of a loud speaker of the smartphone (10, 11),
- detect an environment temperature with a temperature sensor of the smartphone (10, 11)
- detect the battery consumption of the smartphone (10, 11),
- detect whether the screen of the smartphone (10, 11) is switched on,
- detect pressing of a key on a mechanical key or on a touch-sensitive surface of the smartphone (10, 11), or
- detect an establishment or disconnection of a connection between the smartphone (10, 11) and a power source.

3. Method according to claim 2, wherein an activity state is inferred if at least one of the following conditions is fulfilled:
the smartphone (10, 11) is moved for a time period which exceeds a predefined threshold duration,
the environment brightness of the smartphone (10, 11) lies above a predefined threshold brightness for a predefined time period,
the environment volume of the smartphone (10, 11) lies above a predefined threshold volume for a predefined time period,
a loud speaker of the smartphone (10, 11) generates acoustic signals at least for a predefined duration,
an environment temperature lies above a predefined threshold temperature,
the battery consumption lies above a threshold value within a defined time period,
an establishment or disconnection of a connection between the smartphone (10, 11) and a power source is noticed.

4. Method according to one of claims 1 to 3, wherein the state of rest of the user is inferred if no activity has been noticed for a predefined time period.

5. Method according to one of claims 1 to 4, wherein the state of rest of the user is inferred if the smartphone (10, 11) is switched off and / or a certain profile setting of the smartphone (10, 11) is selected.

6. Method according to one of claims 1 to 5, wherein at least one of the following additional measures is carried out:
- a room brightness is measured in a room to be temperature-controlled by the heating and / or air conditioning system (90),
- a room volume is measured in a room to be temperature-controlled by the heating and / or air conditioning system (90),
- a movement of a user is detected with a movement sensor in a room other than a bedroom,
- a computer use of a computer which is located in a room to be temperature-controlled by the heating and / or air conditioning system (90) is noticed and
- an email or internet use of the user is noticed and
wherein the activity state is inferred:
- if the room brightness exceeds a predefined threshold value, in particular for a predefined time period, or
- if the room volume exceeds a predefined threshold value, in particular for a predefined time period, or
- if a movement is detected in the room other than the bedroom, in particular over at least a predefined time period,
- if a computer use is noticed, or
- if an email or internet use of the user is noticed.

7. Method according to one of claims 1 to 6, wherein the location of the smartphone (10, 11) is detected with the smartphone (10, 11),
a distance between the location of the smartphone (10, 11) and the location of the heating and / or air conditioning system (90) or of a bedroom to be temperature-controlled is noticed,
the night mode is only switched on when the distance is shorter than a tolerance distance.

8. Method according to one of claims 1 to 7, wherein for energy saving operation of the smartphone (10, 11) an activity of the user is only checked when a distance between the smartphone (10, 11) and the heating and / or air conditioning system (90) or a bedroom to be temperature-controlled is shorter than a tolerance distance.

9. Method according to one of claims 1 to 8, wherein
the durations of states of rest of the user are detected and stored as reference sleep durations and / or
clock times at which a change from a state of rest to an activity state is noticed are detected and stored as reference getting-up times,
to switch off the night mode before an activity state of the user is noticed the switching-off of the night mode is carried out as a function of a ratio of a current sleep duration to the reference sleep durations and / or a ratio of the current clock time to the reference getting-up times.

10. Method according to one of claims 1 to 9,
wherein a duration of at least one state of rest of the user is detected and stored as a reference sleep duration and / or
as a reference going-to-sleep time and as a reference getting-up time, it is stored when a change to a state of rest and when a change to an activity state are noticed are,
a squelch time, within which a change between the activity state and the state of rest is categorised as implausible, is determined from a clock time of the last change between an activity state and a state of rest and also from the reference sleep duration and / or the reference going-to-sleep time and the reference getting-up time, and
a switching-on or switching-off of the night mode is only permitted outside of the squelch time.

11. Method according to one of claims 1 to 10, wherein
the electronic control means (30) switch on or off the night mode as a function of a respective state of rest or activity state of several users,
a state of rest or an activity state of each user is inferred by means of the respective smartphone (10, 11) of the different users.

12. Method according to one of claims 1 to 11, wherein for energy saving operation of the respective smartphone (10, 11) an activity of the respective user is only checked when the respective distance of all smartphones (10, 11) from the heating and / or air conditioning system (90) or from a bedroom to be temperature-controlled is shorter than a tolerance distance.

13. Control apparatus for switching on and off a night mode of a heating and / or air conditioning system (90),
wherein energy consumption of the heating and / or air conditioning system (90) is reduced when the night mode is switched on and increased when the night mode is switched off,
wherein the control apparatus comprises a setting device (80) which can be connected to the heating and / or air conditioning system (90) to change the heating and / or cooling output thereof,
wherein the setting device (80) comprises data transmission means for receiving an instruction from electronic control means (30),
wherein the control apparatus comprises a non-volatile data memory (15, 16) with program code which can be run by a smartphone (10, 11),
the program code is designed, when run on the smartphone (10, 11), to:
- detect an activity of a user of the smartphone (10, 11),
**characterized in that** the program code is further designed, when run on the smartphone (10, 11), to
- infer an activity state of the user if an activity is noticed,
- infer a state of rest of the user in the absence of activity; and
- send information concerning whether a state of rest or an activity state has been noticed to electronic control means (30) which are designed, as a function of this information, to send an instruction to change the heating and / or cooling output to the setting device (80) in order to switch on or off the night mode.

14. Control apparatus according to claim 13, wherein
the control apparatus is designed to automatically carry out the method according to one of the claims 1 to 12.

## Revendications

1. Procédé pour activer et désactiver un mode nuit d'une installation de chauffage et/ou de climatisation (90),
tandis que la consommation d'énergie de l'installation de chauffage et/ou de climatisation (90) est réduite lorsque le mode nuit est mis en marche et augmentée lorsque le mode nuit est éteint,
tandis qu'une activité d'un utilisateur du smartphone (10, 11) est détectée avec un smartphone (10, 11),
**caractérisé en ce que**
avec un code programme, un état d'activité de l'utilisateur est déduit, lorsqu'une activité est détectée, et un état de repos de l'utilisateur est déduit en cas d'absence d'activité, tandis que le code programme est enregistré dans une mémoire de données non volatile (15, 16), et
des moyens de commande électroniques (30) activent ou désactivent le mode nuit selon qu'un état de repos ou un état d'activité de l'utilisateur a été détecté.

2. Procédé selon la revendication 1,
tandis qu'une ou plusieurs des mesures de contrôle suivantes sont mises en oeuvre pour contrôler une activité de l'utilisateur :
- détection d'un mouvement du smartphone (10, 11) avec un capteur d'accélération du smartphone (10, 11),
- détection d'une luminosité de l'environnement avec un capteur de lumière du smartphone (10, 11) ou avec une cellule solaire située sur le smartphone (10, 11) pour générer du courant,
- détection d'un volume sonore de l'environnement avec un microphone du smartphone (10, 11),
- détection d'une activation d'un haut-parleur du smartphone (10, 11),
- détection d'une température de l'environnement avec un capteur de température du smartphone (10, 11),
- détection de la consommation de la batterie du smartphone (10, 11),
- détecter si l'écran du smartphone (10, 11) est allumé,
- détection d'une frappe sur une touche mécanique ou sur une surface tactile du smartphone (10, 11) et
- détection de l'établissement ou de la déconnexion d'une connexion entre le smartphone (10, 11) et une source de courant.

3. Procédé selon la revendication 2,
tandis qu'un état d'activité est déduit, lorsqu'au moins une des conditions suivantes est remplie :
le smartphone (10, 11) est déplacé pendant une période de temps dépassant une période seuil prédéterminée,
la luminosité de l'environnement du smartphone (10, 11) est supérieure à une luminosité de seuil prédéterminée pendant une période de temps prédéterminée,
le volume sonore de l'environnement du smartphone (10, 11) est supérieur à un volume sonore de seuil prédéterminé pendant une période de temps prédéterminée,
un haut-parleur du smartphone (10, 11) génère des signaux acoustiques pendant au moins une durée prédéterminée,
une température de l'environnement est supérieure à une température seuil prédéterminée,
la consommation de la batterie est supérieure à une valeur seuil pendant une période de temps déterminée,
un établissement ou une déconnexion d'une connexion entre le smartphone (10, 11) et une source de courant est constatée.

4. Procédé selon une des revendications 1 à 3,
tandis que l'état de repos de l'utilisateur est déduit, lorsqu'aucune activité n'a été constatée pendant une période de temps prédéterminée.

5. Procédé selon une des revendications 1 à 4,
tandis que l'état de repos de l'utilisateur est déduit, lorsque le smartphone (10, 11) est éteint et/ou lorsqu'un certain réglage de profil du smartphone (10, 11) est sélectionné.

6. Procédé selon une des revendications 1 à 5,
tandis qu'au moins une des mesures supplémentaires suivantes est mise en oeuvre :
- une luminosité de l'environnement est mesurée dans une pièce devant être tempérée par l'installation de chauffage et/ou de climatisation (90),
- un volume sonore de la pièce est mesuré dans une pièce à tempérer par le système de chauffage et/ou de climatisation (90),
- un mouvement d'un utilisateur est détecté à l'aide d'un détecteur de mouvement dans une pièce autre qu'une chambre à coucher,
- une utilisation d'un ordinateur à partir d'un ordinateur situé dans une pièce devant être tempérée par l'installation de chauffage et/ou de climatisation (90) est détectée et
- une utilisation du courrier électronique ou d'Internet de l'utilisateur est constatée et
tandis que l'état d'activité est déduit
- lorsque la luminosité de la pièce dépasse une valeur seuil prédéterminée, en particulier pendant une période de temps prédéterminée, ou
- lorsque le volume sonore dépasse une valeur seuil prédéterminée, en particulier pendant une période de temps prédéterminée, ou
- lorsqu'un mouvement est détecté dans une pièce autre que la chambre à coucher, en particulier pendant au moins une période de temps prédéterminée,
- lorsqu'une utilisation d'un ordinateur est constatée, ou
- lorsqu'une utilisation d'un courrier électronique ou d'Internet de l'utilisateur est détectée.

7. Procédé selon une des revendications 1 bis 6,
tandis que l'emplacement du smartphone (10, 11) est déterminé avec le smartphone (10, 11),
tandis qu'une distance est déterminée entre l'emplacement du smartphone (10, 11) et l'emplacement de l'installation de chauffage et/ou de climatisation (90) ou d'une chambre à coucher à tempérer,
tandis que le mode nuit est uniquement activé lorsque la distance est inférieure à une distance de tolérance.

8. Procédé selon une des revendications 1 bis 7,
tandis que pour le fonctionnement économe en énergie du smartphone (10, 11), une activité de l'utilisateur n'est contrôlée que si une distance entre le smartphone (10, 11) et le système de chauffage et/ou de climatisation (90) ou une chambre à coucher à tempérer est inférieure à une distance de tolérance.

9. Procédé selon une des revendications 1 à 8,
tandis que les durées des états de repos de l'utilisateur sont détectées et mémorisées en tant que durées de sommeil de référence d'un utilisateur et/ou tandis que des heures auxquelles un passage d'un état de repos à un état d'activité est constaté sont détectées et enregistrées en tant que heures de lever de référence,
tandis que pour désactiver le mode nuit avant qu'un état d'activité de l'utilisateur ne soit constaté, le mode nuit est désactivé en fonction d'un rapport entre une durée de sommeil momentanée et les durées de sommeil de référence et/ou d'un rapport entre une heure momentanée et les heures de lever de référence.

10. Procédé selon une des revendications 1 à 9,
tandis qu'une durée d'au moins un état de repos de l'utilisateur est détectée et mémorisée en tant que durée de sommeil de référence et/ou tandis que sont enregistrés en tant qu'heure d'endormissement de référence et en tant qu'heure de lever de référence le moment auquel un passage à un état de repos et auquel un passage à un état d'activité sont constatés, tandis qu'une durée de blocage, pendant laquelle un changement entre l'état d'activité et l'état de repos n'est pas considéré comme plausible, est déterminée à partir d'une heure du dernier changement entre un état d'activité et un état de repos ainsi qu'à partir de la durée de sommeil de référence et/ou de l'heure d'endormissement de référence et de l'heure de lever de référence, et
tandis qu'un activation ou une désactivation du mode nuit n'est permise qu'en dehors de ce temps de blocage.

11. Procédé selon une des revendications 1 à 10,
tandis que les moyens de commande électroniques (30) activent ou désactivent le mode nuit selon l'état de repos respectif ou l'état d'activité respectif de plusieurs utilisateurs,
tandis que, pour les différents utilisateurs, un état de repos ou un état d'activité de chaque utilisateur est déduit via respectivement un smartphone (10, 11).

12. Procédé selon une des revendications 1 à 11,
tandis que, pour le fonctionnement économe en énergie du smartphone respectif (10, 11), une activité de l'utilisateur respectif n'est contrôlée que si la distance respective de tous les smartphones (10, 11) par rapport à l'installation de chauffage et/ou de climatisation (90) ou à une chambre à tempérer est inférieure à une distance de tolérance.

13. Dispositif de commande pour l'activation et la désactivation d'un mode nuit d'une installation de chauffage et/ou de climatisation (90),
tandis qu'une consommation d'énergie de l'installation de chauffage et/ou de climatisation (90) est réduite lorsque le mode nuit est activé et augmentée lorsque le mode nuit est désactivé,
tandis que le dispositif de commande comprend un dispositif de réglage (80) qui peut être raccordé à l'installation de chauffage et/ou de climatisation (90) pour modifier sa puissance de chauffage et/ou de climatisation,
tandis que le dispositif de réglage (80) comprend des moyens de transmission de données pour recevoir une instruction provenant de moyens de commande électroniques (30),
tandis que le dispositif de commande comprend une mémoire de données non volatile (15, 16) avec un code de programme exécutable depuis un smartphone (10, 11),
tandis que le code de programme est configuré, lors d'une mise en oeuvre sur le smartphone (10, 11), pour
- détecter une activité d'un utilisateur du smartphone (10, 11),
**caractérisé en ce que** le code de programme est en outre configuré, lors d'une mise en oeuvre sur le smartphone (10, 11), pour
- déduire un état d'activité de l'utilisateur lorsqu'une activité est constatée,
- déduire un état de repos de l'utilisateur en l'absence d'activité, et
- envoyer des informations sur le fait qu'un état de repos ou un état d'activité a été constaté ou non aux moyens de commande électroniques (30), lesquels sont configurés pour, en fonction de ces informations, envoyer une instruction au dispositif de réglage (80) pour modifier la puissance de chauffage et/ou de refroidissement afin d'activer ou de désactiver le mode nuit.

14. Dispositif de commande selon la revendication 13,
tandis que le dispositif de commande est configuré pour la mise en oeuvre automatique du procédé selon une des revendications 1 à 12.
